Europäisches Patentamt

European Patent Office

Office européen des brevets

(11) Publication number: **0 258 503**
**A1**

(12) # EUROPEAN PATENT APPLICATION

(21) Application number: **86306641.1**

(22) Date of filing: **28.08.86**

(51) Int. Cl.⁴: **B01J 29/06** , **C10G 45/64**

(43) Date of publication of application:
**09.03.88 Bulletin 88/10**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Chen, Nai Yuen**
**4 Forrest Central Drive**
**R.D. Titusville New Jersey 08560(US)**
Inventor: **McCullen, Sharon Brawner**
**119 Colonial Drive**
**Newtown Pennsylvania 18940(US)**
Inventor: **Oleck, Stephen Michael**
**241 Williams Avenue**
**Moorestown New Jersey 08057(US)**

(74) Representative: **Cooper, John Anthony et al**
**Mobil Court 3 Clements Inn**
**London WC2A 2EB(GB)**

(54) **Catalyst preparation method.**

(57) Zeolite catalyst, containing a highly dispersed noble metal, is prepared by intense physical mixing, e.g., mix mulling the zeolite, noble metal and a binder into an extrudate and chlorine treating the extrudate to achieve a high dispersion of noble metal on the catalyst.

EP 0 258 503 A1

## CATALYST PREPARATION METHOD

This invention relates to a process for preparing a noble metal-containing catalyst. More particularly, this invention relates to a process for preparing zeolite catalysts containing a highly dispersed noble metal in the form of small crystallites.

Shape-selective catalysis utilizing molecular sieves was first demonstrated by P. B. Weisz and V. J. Frilette in J. Phys. Chem., 64, page 302 (1960). Since then, the shape-selective catalytic properties of various zeolites have been extensively demonstrated. For example, N. Y. Chen and W. E. Garwood, in "Some Catalytic Properties of ZSM-5, a New Shape Selective Zeolite", Journal of Catalysis, 52, pages 453-458 (1978), described the shape-selectivity of ZSM-5. Use of zeolites as shape-selective supports for catalytic functions has received less attention.

An excellent summary of the art of metal loaded zeolite catalysts and shape-selective catalysis is given in Zeolite Chemistry and Catalysts, J. A. Rabo, Ed., ACS Monograph 171 (1976). Of particular interest is Chapter 10, "Catalytic Properties of Metal-Containing Zeolites" by K. M. Minachev and Y. I. Isakov, and Chapter 12, "Shape-Selective Catalysis" by S. M. Csicsery.

U. S. Patent No. 4,312,790 to Butter et al discloses a method of preparing a noble metal-containing catalyst by incorporating a noble metal in a cationic form with a zeolite after crystallization, but prior to the final catalyst particle formation. The zeolite is calcined after extrusion, i.e., after addition of the noble metal. Such catalysts are an improvement over those catalysts wherein the metal is incorporated during zeolite crystallization, or after extrusion. The catalyst thus produced also exhibits little hydrogenation-dehydrogenation activity.

There has not been any disclosure of an efficient and economical process for preparing a highly-dispersed noble metal-containing hydroisomerization zeolite catalyst.

Accordingly, the present invention provides a method for preparing a highly dispersed noble metal-containing catalyst comprising a zeolite having a Constraint Index less than 2 and a binder characterized by incorporating 0.01 to 10 wt % at least one noble metal in anionic or cationic form with the zeolite and the binder by physical intimate mixing to form a mixture calcining the mixture in an atmosphere containing steam to form a calcined mixture contacting the calcined mixture with a steam of inert gas containing 0.001 to 10 wt % chlorine at 250 to 550°C to produce a catalyst.

Fig. 1 and Fig. 2 are graphs comparing % n-C$_{16}$ conversion and % i-C$_{16}$ yield at different temperatures for the catalyst of Examples 1 and 2 respectively.

Fig. 3 is a similar graph for the catalyst of Example 4.

Catalysts produced by the process of the present invention are especially useful as hydroisomerization catalysts, and particularly as low pressure hydroisomerization catalysts.

## Hydroisomerization

Hydroisomerization of n-paraffins is an important reaction in many refining processes. In naphtha reforming, n-paraffins are isomerized to increase the naphtha octane number. Isomerization of n-paraffins in higher boiling petroleum fractions, e.g., distillate and lube boiling range fractions, will improve physical properties such as pour point or cloud point. For example, a 40°-70°C decrease in melting point occurs with a single methyl branch at the 3 through 7 position of C$_9$-C$_{15}$ alkanes, compared to the straight-chain analogs. Isomerization also affects the boiling point, but to a lesser extent, i.e., on the order of 20°C.

Hydrocracking of paraffins can also be used to lower pour point. In contrast to isomerization, in hydrocracking, the paraffin molecule cracks to two or more molecules which contain a lesser number of carbon atoms than the original molecule. These lower molecular weight products have lower melting points and lower boiling points. These differences in isomerization and hydrocracking become important in pour point reduction of a distillate cut.

If paraffin isomerization is the major reaction pathway, the pour point will be lowered with high distillate yield; however, in hydrocracking, the pour point is lowered at the sacrifice of distillate yield. Pt/SiO$_2$-Al$_2$O$_3$ and Pt/Mordenite are some commonly used isomerization catalysts, as disclosed by A. P. Bolton in Zeolite Chemistry and Catalysis (J. A. Rabo, Ed.), ACS Monograph 171, page 739, American Chemical Society, Washington, DC, 1976, and J. Weitkamp, Ind. Eng. Prod. Res. Dev., 1982, 21, pages 550-558.

Paraffin isomerization by metal-containing zeolite catalysts is discussed in Advances in Catalysis (D. D. Eley, H. Pines, and P. B. Weisz, Ed.), Vol. 13, page 137, Academic Press, New York, 1963.

For maximum isomerization selectivity, high metal surface area, low acidity and the close proximity of metal and acid sites are required. The metal-acid site proximity requirement may be a function of the reaction which involves a series of steps where n-paraffin is dehydrogenated by Pt to form an n-olefin. The n-olefin then moves to the acid site where isomerization occurs to product i-olefin. At this point, the isomerization selectivity is determined by the proximity of the metal sites to the acid sites. The rate of isomerization at the acid site is generally higher than the rate of cracking; therefore the isomerization selectivity is determined by the rate of iso-olefin diffusion to the metal site. According to the Einstein diffusion equation, if the ratio of iso-olefin diffusion rate D ($cm^2$/sec) to the square of the metal-acid site separation (cm) is much greater than the rate of cracking, then the isomerization selectivity will be high. However, if the reverse is true, then the isomerization selectivity will be low.

## Catalysts

The present invention provides a catalyst having excellent hydroisomerization activity. It is believed that the close relationship between zeolite acidity and the metal sites causes the catalyst to function as an excellent isomerization catalyst. By incorporating the steps of steaming the zeolite after the metal has been added, followed by chlorinating the catalyst, the proper metal-acid proximity sites are met.

The catalysts comprise one or more crystalline silicate zeolites, as defined herein, a noble metal and a binder. The noble metal is physically, intimately admixed with the zeolite subsequent to zeolite crystallization, but prior to extrusion (final catalyst particle formation). Such metal incorporation can be accomplished either before or after addition of a binder, e.g., mulling with alumina; but, in any event, before extrusion.

The preferred catalysts for this invention are zeolite-type catalysts and, most preferably, large pore zeolites having a Constraint Index less than 2. The term "zeolite" represents the class of porotectosilicates, i.e., porous crystalline silicates, that contain silicon and oxygen atoms as the major components. Other components may be present in minor amounts, usually less than 14 mole %, and preferably less than 4 mole %. These components include aluminum, gallium, iron, boron and the like, with aluminum being preferred, and used herein for illustrative purposes. The minor components may be present separately or in mixtures.

The silica-to-alumina mole ratio referred to may be determined by conventional analysis. This ratio is meant to represent, as closely as possible, the ratio in the rigid anionic framework of the zeolite crystal and to exclude aluminum in the binder or in cationic or other forms within the channels. Although zeolites with a silica-to-alumina ratio of at least 10 are useful, it is preferred to use zeolites having much higher silica-to-alumina mole ratios, i.e., ratios of at least 150:1. In addition, zeolites, as otherwise characterized herein but which are substantially free of aluminum, i.e., having silica-to alumina mole ratios up to and including infinity, are found to be useful and even preferable in some instances. The novel class of zeolites, after activation, preferably acquire an intra crystalline sorption affinity for normal hexane, which is greater than that for water, i.e., they exhibit "hydrophobic" properties.

A convenient measure of the extent to which a zeolite provides control to molecules of varying sizes to its internal structure is the Constraint Index, described in U. S. Patent No. 4,016,218.

Constraint Index (CI) values for some typical large pore materials are listed below, along with patents which give more information about the zeolites:

|  | CI | U.S. Patent |
|---|---|---|
| ZSM-4 | 0.5 | 3,923,639 |
| ZSM-20 | 0.5 | 3,972,983 |
| TEA Mordenite | 0.4 | |
| Mordenite | 0.5 | |
| REY | 0.4 | |
| Amorphous Silica-Alumina | 0.6 | |
| Dealuminized Y (Deal Y) | 0.5 | |
| Chlorinated Alumina | *1 | |
| Zeolite Beta | 0.6-1+ | 3,308,069 |

* Less Than

Constraint Index or CI seems to vary somewhat with severity of operation (conversion) and the presence or absence of binders. Likewise, other variables, such as crystal size of the zeolite, the presence of occluded contaminants, etc., may affect the Constraint Index.

Low sodium Ultrastable Y molecular sieve (USY) has a CI close to that of REY and DeAl Y and is described in U. S. Patents Nos. 3,293,192 and 3,449,070.

The acidic component of the zeolite is preferably a porous crystalline zeolite. The crystalline zeolite catalysts used in the catalyst comprise a three-dimensional lattice of $SiO_4$ tetrahedra, cross-linked by the sharing of oxygen atoms and which may optionally contain other atoms in the lattice, especially aluminum in the form of $AlO_4$ tetrahedra; the zeolite will also include a sufficient cationic complement to balance the negative charge on the lattice. Acidic functionality may be varied by artifices including base exchange, steaming or control of silica:alumina ratio.

The original cations associated with the zeolites may be replaced by a wide variety of other cations, according to techniques well known in the art. Typical replacing cations include hydrogen, ammonium, alkyl ammonium and metal cations, including mixtures of the same. Preference is given to cations of metals such as rare earth metals and manganese, as well as metals of Group IIA and B of the Periodic Table, e.g., zinc, and Group VIII of the Periodic Table, e.g., nickel, platinum and palladium.

It is preferred to incorporate the zeolite with a binder or material resistant to the temperatures and other conditions employed in organic conversion processes. Such materials include active and inactive materials as well as inorganic materials, such as clays, silica and/or metal oxides. Inactive materials suitably serve as diluents to control the amount of conversion in a given process so that products can be obtained economically without employing other means for controlling rate of reaction. Useful binders include inorganic oxides, notably alumina, which is particularly preferred.

Other matrix materials, such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-alumina-zirconia may also be used. The proportions of zeolite and matrix may vary widely, with the zeolite content ranging from 1 to 90 wt %, and preferably 50 to 80 wt % of the composite.

The zeolites used in the present invention have a Constraint Index less than 2. They are relatively large pore zeolites, and admit the vast majority of components normally found in a feed. They have a pore size in excess of 7 Angstroms. Zeolite Y, Ultrastable Y (USY), Dealuminized Y (Deal Y), Mordenite, faujasite, ZSM-3, ZSM-4, ZSM-18, ZSM-20 are suitable. An exceptionally suitable large pore material is Zeolite Beta, which is structurally distinguished from large pore zeolites and behaves differently from either large pore zeolites or intermediate pore zeolites. Preferably, Zeolite Beta has a $SiO_2/Al_2O_3$ ratio of 120:1 or greater.

Metals which may be incorporated within the zeolite include a metal or metals of Groups IB, IIB, VA, VIA or VIIIA of the Periodic Table (IUPAC and U. S. National Bureau of Standards approved Table). Preferred are the noble metals of Group VIIIA, especially platinum, but other noble metals, such as palladium, osmium, ruthenium or rhodium may also be used. Combinations of noble metals, such as platinum palladium, together with combinations with non-noble metals, particularly of Groups IB, IVB, VIIA and VIIA are of interest.

The metal may be dispersed with the catalyst or otherwise combined by physical intimate mixing or mulling with the catalyst in any desired manner known to the art, such as in a ball mill, pelletizer, jet mill, muller mixer or the like. The metal may be incorporated in the form of a cationic or anionic complex, and cationic complexes of this type will be found convenient for exchanging metals onto the zeolite. Anionic complexes are also useful for impregnating metals into the zeolites. The noble metal content is 0.01 to 10 wt %, and preferably 0.3 to 3 wt %.

A preferred procedure for preparing a typical noble metal containing zeolite catalyst comprises:

(1) Preparing the zeolite by known procedures;

(2) Mulling the zeolite with a noble metal source, a binder and enough water to form an extrudable mass;

(3) Extruding to form catalyst pellets, followed by drying, preferably in air at 100 to 150°C;

(4) Calcining in an atmosphere containing some steam;

(5) Reducing in hydrogen; and

(6) Treating at 250 to 510°C with a stream of 0.001 to 10 wt % chlorine ($Cl_2$) in an inert gas until $Cl_2$ appears at the reactor outlet.

The noble metal component is physically, intimately admixed with the zeolite in the form of either cationic or anionic noble metal species or their salts. In the case of the preferred metal, platinum, suitable cationic compounds include platinous chloride and various compounds containing platinum amine or amine complexes.

Many metal compounds can be used as a source of metallic cations and include both inorganic and organic salts of the noble metals. Representative of the salts which can be employed are nitrates and chlorides. The salt should be soluble in the fluid medium.

Conventional methods of adding noble metal to the zeolites, e.g., excess solution ion-exchange methods, do not permit good control of metal loading. Co-crystallization of the noble metal during zeolite formation may require significant modification of zeolite manufacturing facilities. However, the addition of noble metals during mulling of the zeolite with the inorganic oxide binder is achieved with no substantial modification of conventional process equipment. By the present invention, zeolitic catalysts of high noble metal dispersion and reduced noble metal crystallite size can be readily prepared.

Preferably the reducing step uses hydrogen as the reducing gas, e.g., 0.05 to 5 vol % in an inert gas carrier such as nitrogen or helium, at atmospheric to 2900 kPa (400 psig) preferably at 300 to 500°C.

An an optional step following the reducing step, the catalyst may be treated with a halide-providing compound. "Halide-providing", means a compound containing ionically or covalently bound halogen which can release the halogen in halide form to the catalyst surface. The hydrogen halides can be hydrogen fluoride, hydrogen chloride, hydrogen bromide, or hydrogen iodide. Preferably, hydrogen chloride is the halide-providing compound used in the process. The atmosphere contacting the catalyst in this step can contain other inert gases, e.g., nitrogen and the like. The halide treatment is generally conducted at 250 to 510°C, preferably 375 to 475°C. The halide treatment preferably continues until the halide appears at the reactor outlet. The catalyst preferably contains 0.001 to 10 wt % halide, most preferably 0.01 to 1.0 wt %.

The catalyst is then subjected to a halogen redispersion step by contacting the catalyst with a stream comprising elemental halogen gas. Elemental halogen gases, which are applicable, include fluorine, chlorine, bromine and iodine, with chlorine being a preferred embodiment. The halogen redispersion step is preferably carried out at 250 to 510°C, most preferably 375 to 475°C, until halogen breakthrough, i.e., the first detection by an analytical method.

The catalyst is then reduced in hydrogen, preferably at 250 to 500°C.

The process of the present invention provides a zeolite catalyst containing a highly dispersed noble metal, while avoiding the problems of the prior art catalyst preparation processes. The steaming step occurs after the noble metal has been added to the zeolite, not before as is the case in most prior art inventions. Steaming after noble metal addition allows the noble metal to bind to the zeolite during the chlorination step.

## Example 1

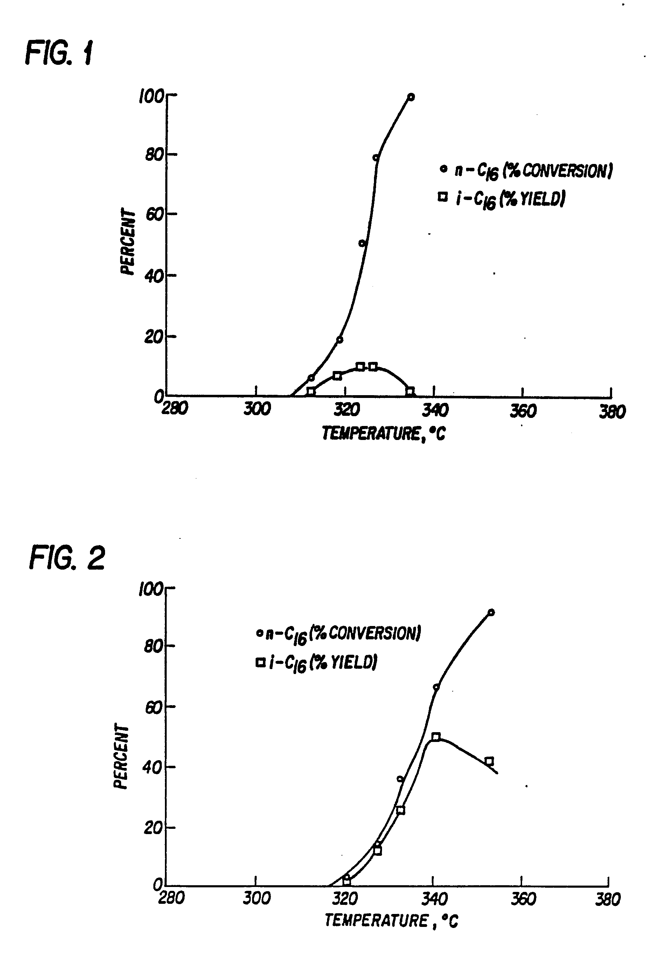

A Zeolite Beta ($SiO_2/Al_2O_3$ = 40:1) catalyst was prepared by mulling 100 grams of low sodium as-synthesized Zeolite Beta (dry basis) with 1.22 grams platinum, as $Pt(NH_3)_4(NO_3)_2$ solution, and 100 grams alumina (Kaiser alpha-alumina monohydrate). The mulled mixture was extruded to 1.6 mm (1/16") diameter cylinders, dried at 130°C and then air-calcined at 500°C. The hydroisomerization activity and selectivity was determined using a feed which contained 89.1% $n$-$C_{16}$, 10% 1-methylnaphthalene, 0.57% dibenzothiophene and 0.25% dibenzoquinolene. The results are illustrated on Fig. 1, which shows a plot of $n$-$C_{16}$ conversion (small circles) and $i$-$C_{16}$ yield (small squares) versus temperature.

## Example 2

A Pt/Zeolite Beta extrudate was prepared as described in Example 1. After drying, the extrudate was steamed at 540°C, 0.9 atm water and 0.1 atm air for 16 hours. Following reduction, hydrogen chloride in nitrogen was introduced to the steam extrudate at 450°C, 20 torr hydrogen chloride for 2 hours. The catalyst was then treated with 10 torr chlorine in nitrogen at 450°C for 4 hours, followed by reduction at 450°C. The hydroisomerization activity and selectivity was examined using the same feed as in Example 1. Fig. 2 illustrates the $n$-$C_{16}$ conversion (small circles) and $i$-$C_{16}$ yield (small squares) for the catalyst of Example 2. As shown in Fig. 2, a large increase in the $i$-$C_{16}$ yield was observed while the catalyst was approximately 10°C less active for $n$-$C_{16}$ conversion, in comparison to that shown in Example 1. Thus, a higher isomerization selectivity is observed in the catalyst of Example 2 than in the catalyst of Example 1. Because high isomerization selectivity is desired, the catalyst in Example 2 was found to be superior to that in Example 1. The superiority of the catalyst of Example 2 is probably a result of the combination of intimate mulling, steaming and halogen treatment.

## Example 3

Example 3 illustrates catalyst preparation where $Al_2O_3$ is not steamed. Zeolite Beta ($SiO_2/Al_2O_3$ = 40:1) was calcined at 500°C in $N_2$ for 2 hours, then steamed at 540°C, 0.9 atm $H_2O$ and 0.1 atm air for 10 hours. 100 grams of steamed Zeolite Beta was then mulled with 100 grams alumina (Kaiser alpha-alumina monohydrate) and 1.22 grams platinum as $Pt(NH_3)_4(NO_3)_2$. The mulled mixture was extruded to 1.6 mm (1/16″) diameter cylinders, dried at 130°C and air-calcined at 500°C. The isomerization activity and selectivity was examined using the same feed as in Example 1. The hydroisomerization activity and selectivity are reported as in Fig. 1.

## Example 4

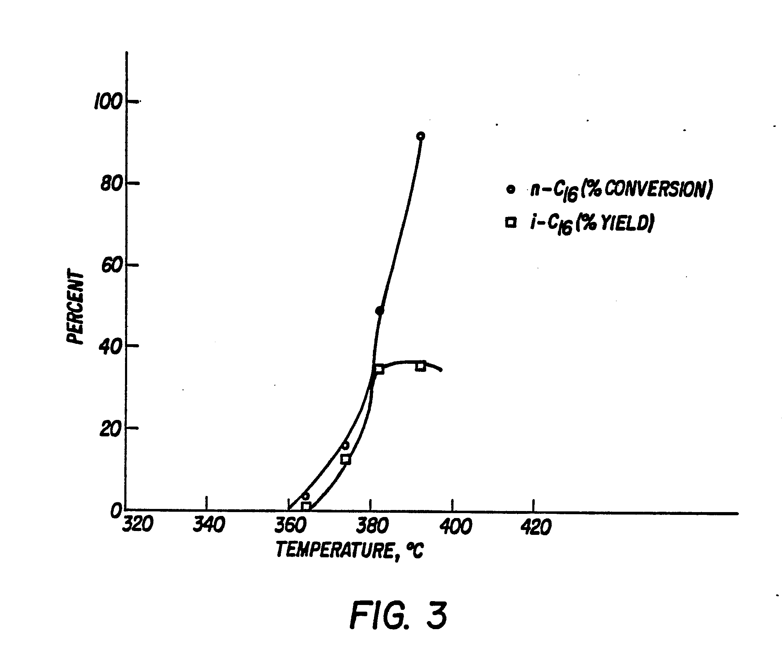

Example 4 illustrates the chlorine treatment a Pt/Zeolite Beta/$Al_2O_3$ extrudate prepared as in Example 3. The catalyst was then treated with 10 torr chlorine in nitrogen at 450°C for 4 hours, followed by reduction at 450°C. Using the feed described in Example 1, the hydroisomerization activity and selectivity was examined. As shown in Fig. 3, the catalyst of Example 2 is more active and selective for isomerization than the catalyst of Example 4.

## Example 5

Example 5 illustrates the optional use of hydrogen chloride. A Pt/Zeolite Beta/$Al_2O_3$ extrudate was prepared as described in Example 3. Following reduction, hydrogen chloride in nitrogen was introduced to the extrudate at 450°C, 20 torr hydrogen chloride for 2 hours. The catalyst was then treated with 10 torr chlorine in nitrogen at 450°C for 4 hours, followed by reduction at 450°C. This catalyst has isomerization activity and selectivity similar to that shown in Fig. 3.

The examples show steaming the Pt/Zeolite Beta/$Al_2O_3$ extrudate and chlorine treatment results in a catalyst with superior isomerization activity and selectivity. Omitting the steam or chlorine treatments results in a catalyst with poor isomerization selectivity. It can be shown that steaming of the Pt/Zeolite Beta/$Al_2O_3$ extrudate decreases the affinity of $Al_2O_3$ for platinum during chlorine treatment. The platinum can then be directed to the zeolite during chlorine treatment so as to satisfy the acid-metal site proximity requirement.

## Claims

1. A method for preparing a highly dispersed noble metal-containing catalyst comprising a zeolite having a Constraint Index less than 2 and a binder characterized by:

(a) incorporating at least one 0.01 to 10 wt % noble metal in anionic or cationic form with the zeolite and the binder by physical intimate mixing to form a mixture;

(b) calcining the mixture in an atmosphere containing steam to form a calcined mixture; and

(c) contacting the calcined mixture with a stream of inert gas containing 0.001 to 10 wt % chlorine at 250 to 550°C to produce a catalyst.

2. The method of Claim 1, further characterized in that at least one noble metal is selected from the group of platinum, palladium, osmium, rhenium and ruthenium.

3. The method of Claim 1 or 2, further characterized in that the noble metal content of the catalyst is 0.3 to 3 wt %.

4. The method of any preceeding claim further characterized in that the binder is alumina, silica, magnesia, titania and zirconia or mixtures thereof.

5. The method of any preceeding claim further characterized in that the zeolite is Zeolite Y, Ultrastable Y, Dealuminized Y, Mordenite, faujasite, ZSM-3, ZSM-4, ZSM-18 or ZSM-20.

6. The method of any preceeding claim further characterized in that the zeolite is Zeolite Beta

7. The method of Claim 6, further characterized in that the Zeolite Beta has a $SiO_2/Al_2O_3$ ratio of at least 120:1.

8. The method of any preceeding claim further characterized in that the calcined mixture is treated with inert gas containing a halogen halide to add 0.001 to 10 wt % halogen to the calcined mixture.

9. The method of claim 8 further characterized in that the halogen is hydrogen chloride.

10. A catalyst prepared by the method of any preceeding claim.

6

11. A hydrocarbon hydroisomerization process characterized by the use of the catalyst of claim 10.

**FIG. 1**

- ○ $n-C_{16}$ (% CONVERSION)
- □ $i-C_{16}$ (% YIELD)

PERCENT vs TEMPERATURE, °C

**FIG. 2**

- ○ $n-C_{16}$ (% CONVERSION)
- □ $i-C_{16}$ (% YIELD)

PERCENT vs TEMPERATURE, °C

FIG. 3

# EUROPEAN SEARCH REPORT

**European Patent Office**

Application number

EP 86 30 6641

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 145 289 (EXXON)<br><br>* Pages 32-33 * | | B 01 J 29/06 //<br>C 10 G 45/64 |
| A | EP-A-0 142 351 (EXXON) | | |
| A | US-A-3 691 255 (S.TAKASE) | | |
| A | DE-B-1 273 494 (ESSO) | | |
| A | EP-A-0 038 141 (MOBIL OIL) | | |

|  | | | TECHNICAL FIELDS SEARCHED (Int. Cl.4) |
|---|---|---|---|
| | | | B 01 J 29/00 |

The present search report has been drawn up for all claims

| Place of search | Date of completion of the search | Examiner |
|---|---|---|
| THE HAGUE | 22-05-1987 | DEVISME F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82